# FASCICULE DE BREVET EUROPEEN

(11) **EP 1 177 474 B1**
(45) Date de publication et mention de la délivrance du brevet: **09.10.2002**
(21) Numéro de dépôt: 00925409.5
(22) Date de dépôt: 05.05.2000
(51) Int. Cl.: G02B 27/01, G02B 7/182

(54) **DISPOSITIF OPTRONIQUE MUNI D'UN MIROIR DE MISE AU POINT POUR PROJECTION SUR VISIERE**
OPTRONISCHE VORRICHTUNG MIT EINEM SPIEGEL ZUR PROJEKTION AUF EIN VISIER
OPTRONIC DEVICE EQUIPPED WITH A FOCUSING MIRROR FOR VISOR DISPLAY

(30) Priorité: 07.05.1999 FR 9905867
(43) Date de publication de la demande: 06.02.2002
(73) Titulaire: THALES AVIONICS S.A., 78140 Vélizy-Villacoublay (FR)
(72) Inventeur: BAUDOU, Jol, 94117 Arcueil Cedex (FR); PENNETIER, Ludovic, 94117 Arcueil Cedex (FR); POTIN, Laurent, 94117 Arcueil Cedex (FR)
(74) Mandataire: Vigand, Régis Louis Michel
(86) Numéro de dépôt international: FR0001231
(87) Numéro de publication internationale: WO00068727

(56) Documents cités:
- WO-A-98/10323
- DE-A- 4 204 511
- US-A- 3 787 109
- US-A- 5 334 991

## Description

La présente invention a pour objet un dispositif optronique muni d'un miroir de mise au point pour projection sur visière. Le domaine de l'invention est le pilotage d'engins pour lesquels le pilote a besoin de se présenter des informations sans que cela le distrait de son pilotage, par exemple un système de visée avec projection sur la visière du casque du pilote. Le but de l'invention est de faire en sorte qu'un générateur d'images et une visière de projection d'un dispositif optronique soient correctement positionnés l'un par rapport à l'autre. C'est-à-dire que l'image émise par le générateur d'images sera correctement visualisée sur la visière de projection. Un autre objectif est d'élargir les tolérances de fabrication de la structure du dispositif optronique.

DE 4204511 divulgue un moniteur vidéo destiné à être porté sur la tête d'un utilisateur. WO9810323 divulgue un système d'affichage tête haute.

Aucun de ces documents ne divulguent l'utilisation d'une visière.

US3787109 divulgue un système de vision tête haute sans optique de relais entre la source d'image et la visière.

Pour des raisons de masse, d'ergonomie et de sécurité, une large partie des systèmes actuels sont à projection sur visière. Une partie de la visière fait office de miroir semi-réfléchissant pour l'optique du viseur. La forme de cette visière est généralement sphérique ou de révolution, elle agit donc comme des éléments de puissance dans la combinaison optique du viseur. Pour des considérations de durée de vie, la visière est exposée, se raye et se salit, la visière doit être démontable. La visière est un élément optique de grande surface (couverture angulaire de l'oeil) et de faible épaisseur (masse) et en plastique (sécurité et masse), c'est donc un élément fragile, qui se déforme facilement, elle est montée sur un support plastique ou composite.

Le système optique complet comprend donc un générateur d'images qui va générer une image issue d'une source ou purement synthétique, une optique de relais chargée de transporter le rayon lumineux issu de ce générateur vers la visière, qui réalise la superposition d'image avec le paysage naturel observé en transparence directement par l'oeil de l'utilisateur.

L'optique de relais déforme l'image issue du générateur d'images suivant une distorsion inverse de celle introduite par la visière inclinée. La combinaison de l'ensemble optique de relais visière fournit alors une image sans distorsion du générateur d'images.

L'emploi d'une mécanique et d'optique d'une grande précision pour la réalisation de l'optique de relais permet d'obtenir des performances optiques acceptables. Concernant la visière le problème est plus délicat compte tenu de sa démontabilité et de sa déformabilité en fonction des conditions extérieures, notamment la température. Lors de l'intégration, la solution usuelle consistait, après la mise en place de la visière, à recentrer l'optique de relais de façon à ce que l'image obtenue sur la visière de projection soit correcte.

Une autre solution consiste à déplacer la visière jusqu'à ce que celle-ci soit dans une position fournissant une image correcte. Cette solution est acceptable dans le cas d'une visière monoculaire n'ayant qu'un seul centre optique. En effet la visière ayant un rôle de protection à jouer, elle doit être monobloc. Si on considère une visière binoculaire, donc ayant deux centres optiques, il y a fort à parier qu'une fois que le centre optique droit sera en place, le centre optique gauche n'aura pas une position idéale, d'où des distorsions dans l'image finale. La solution binoculaire est la plus répandue, puisque à l'heure actuelle c'est celle qui permet la plus large couverture angulaire, ainsi que la meilleure image.

La mise en oeuvre d'une visière binoculaire nécessite donc le réglage indépendant de l'optique de relais droit et gauche. Ces réglages sont dans ce cas indispensables car les exigences de superposition binoculaire sont très sévères. La tolérance de position de la visière par rapport à l'optique de projection est dans ce cas de l'ordre de 0,05 mm. L'ajustement de ces blocs d'optiques de relais entraîne une mécanique de réglage lourde étant donné les contraintes de précision et de fidélité requise. Ce surcroît de masse est préjudiciable à la sécurité du porteur.

De plus un écart de l'optique de relais par rapport à sa position théorique pourrait introduire des distorsions dues à des effets de bord. Le cheminement des rayons lumineux ne serait en effet plus celui de l'axe optique. Enfin cette solution est difficilement exploitable dans le cadre d'un système amplificateur de lumière, car dans ce cas l'objectif de prise de vue est solidaire de l'optique de relais. Tous les déplacements de cette optique de relais provoqueraient donc un déplacement de l'objectif de prise de vue, le dispositif ne regarderait plus alors dans la bonne direction.

L'invention résout ces problèmes en remplaçant le système de réglage mécanique, positionnement d'un élément optique par rapport à un autre, par un réglage optique. C'est-à-dire on positionne la fonction optique d'un élément optique par rapport à une autre, en lieu et place attendu par cet autre élément. Mécaniquement les éléments conservent leur position, c'est la fonction optique qui se déplace. Dans l'invention les déplacements de la fonction optique sont assurés par un miroir plan. Ce miroir fait en sorte que l'optique de relais voit la visière à sa position théorique, celle qu'aurait la visière si le dispositif était parfait. La position de ce miroir est ajustable afin de pourvoir déplacer les fonctions de l'optique de relais et de la visière l'une par rapport à l'autre.

L'invention a donc pour objet un dispositif optronique, fixé sur un casque, comportant une source 104 d'images, un dispositif 105 optique de relais, une visière 108 de projection semi-réfléchissante, ces trois éléments étant maintenus ensemble par une armature 301 mécanique rigide et, entre l'optique de relais et la visière, sur le cheminement optique des rayons 109 issus de la source d'image, un miroir 106 plan de repliement dont la position est ajustable par rapport à l'armature 301, caractérisé en ce que le miroir 106 de repliement est fixé à un support rigide 304 lui-même relié à l'armature mécanique 301 par un joint élastique 307 et en ce qu'il est maintenu en pression via son support 304 sur des vis de butée vissées dans l'armature, ces vis permettant un pivotement du miroir autour d'axes passant par l'extrémité de deux vis.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration d'un dispositif optronique selon l'invention, en place sur la tête d'un pilote ;
- Figure 2 : une vue de dessus d'un dispositif optronique selon l'invention en place sur la tête d'un pilote ;
- Figure 3 : une vue en coupe du miroir plan et de son dispositif d'ajustage selon l'invention ;
- Figure 4 : une illustration de la mise en oeuvre du dispositif d'ajustage du miroir plan du dispositif optronique selon l'invention.

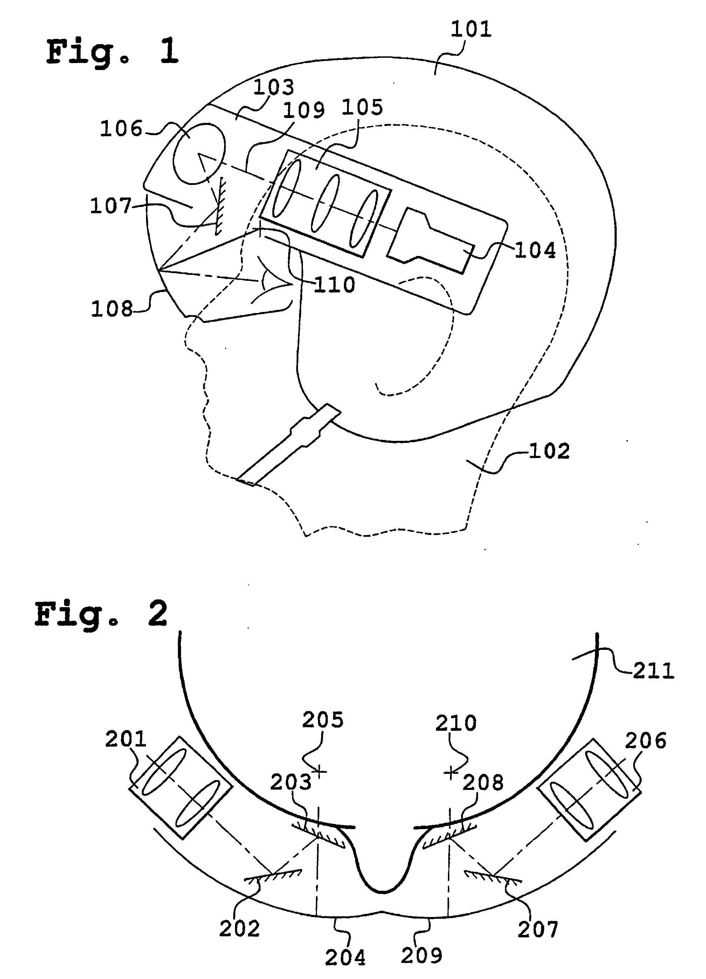

La figure 1 montre un casque 101 porté par un pilote 102. Sur le casque 101 est fixé un dispositif 103 optronique. Le dispositif 103 comporte un générateur 104 d'image qui projette un faisceau lumineux à travers un dispositif 105 optique de relais. A la sortie du dispositif 105 le faisceau lumineux se réfléchit sur deux miroirs 106 et 107 de repliement avant d'arriver sur la visière de projection 108. Lorsque le dispositif 103 est en place sur le casque 101, la visière 108 est en face des yeux du pilote 102. La visière a subi un traitement semi-réfléchissant qui lui permet de jouer à la fois le rôle de visière de projection et de visière de protection.

Le générateur 104 peut être soit une caméra, soit un capteur, soit un câble du type fibre optique amenant une image au dispositif 103. Ainsi les images sont soit des prises de vue, soit des images de synthèse destinées à fournir des renseignements de type signalétique au porteur du casque. Le rôle du dispositif 105 de relais est de prédistordre l'image issue du générateur 104. En effet cette image va être visualisée sur la visière 108 qui de par sa forme est un élément optique actif. Le dispositif 105 va donc apporter à l'image issue du générateur 104 les déformations inverses de celles introduites par la visière 108, ce qui permettra au porteur 102 du casque 101 de voir une image cohérente. Les miroirs 106 et 107 permettent à un rayon 109 lumineux issu du générateur 104 via le dispositif 105 d'atteindre l'oeil du porteur 102 via la visière 108. Ces miroirs 106 et 107 sont donc inactifs optiquement. C'est-à-dire qu'ils ne distordent pas l'image, ils ne servent qu'à amener l'image là où l'on veut qu'elle soit projetée. La disposition du miroir 106 est ajustable. Lorsqu'on déplace le miroir 106, on modifie la position de la visière 108 telle qu'elle est vue par le dispositif 105. Cela permet de corriger les défauts de positionnement ou de forme de la visière 108. Il n'y a pas d'élément optique actif entre le miroir 106 et la visière 108. C'est l'une des conditions qui fait que le déplacement du miroir 106 n'entraîne pas de distorsions supplémentaires dans l'image issue du générateur 104. La position de la visière 108 est caractérisée par la position d'un centre 110 de courbure.

La figure 2 montre un dispositif selon l'invention monté sur un casque placé sur la tête 211 d'un pilote. Le dispositif selon l'invention comporte dans sa partie droite un dispositif 201 optique de relais. Le faisceau lumineux issu du dispositif 201 se réfléchit sur un miroir 202 plan puis sur un miroir 203 plan avant d'arriver sur une partie 204 d'une visière du dispositif selon l'invention. La partie 204 de visière a un centre de courbure 205. La positon du miroir 202 est ajustable. Le fait d'ajuster le miroir 202 permet de faire varier, vu du dispositif 201, la position du centre 205 de courbure. Dans sa partie gauche le dispositif selon l'invention comporte des éléments 206 à 210 identiques aux éléments 201 à 205.

Grâce aux miroirs 202 et 207 il est possible d'ajuster séparément les positions des centres 205 et 210 de courbure des parties de visière 202 et 209. On corrige ainsi un défaut de positionnement physique de la visière, mais aussi un défaut de réalisation de la visière. En effet de par son matériel de réalisation, ses conditions de stockage et d'utilisation, les positions relatives des parties 204 et 209 de visière, composées chacune d'une partie sphérique peuvent varier d'une visière à l'autre. Le dispositif selon l'invention permet de palier à ces variations.

La figure 3 montre une partie d'une armature 301 mécanique. Vu dans son ensemble l'armature 301 est un caisson qui contient l'ensemble du dispositif selon l'invention. Ce caisson a une forme en U qui s'adapte autour du casque sur lequel il est fixé. On prévoit dans l'armature 301, un renflement 302 de forme circulaire. Ce renflement 302 est situé à l'endroit où l'on souhaite positionner un miroir 303 plan ajustable. Le renflement 302 a donc une forme de cratère à fond plat.

Le miroir 303 est fixé sur un support 304. La face réfléchissante du miroir 303 est tournée vers l'intérieur de l'armature 301, face à des rayons 305 lumineux issus du dispositif optique de relais non représenté. Le support 304 comporte un fond plat circulaire 306 dont les dimensions permettent de l'insérer dans le renflement 302. Une fois le fond 306 du support 304 inséré dans le renflement, il reste suffisamment de place entre les parois du renflement et les parois du fond 306 pour un joint 307. Une fois le support 304 en place il reste, entre le fond 306 du support 304 et le fond du renflement 302 un jeu de quelques dixièmes de millimètres.

La figure 3 montre que le fond du renflement 302 est percé de trois pas de vis 308 à 310. Dans chacun de ces pas de vis on insère une vis dont la longueur est légèrement supérieure à l'épaisseur de l'armature 301, qui est aussi l'épaisseur du fond du renflement 302. La tête de ces vis est située à l'extérieur de l'armature 301. On visse alors ces vis jusqu'à arriver en contact avec le fond du support 304. Puis on visse encore ces vis de manière à ce qu'elles pénètrent à l'intérieur de l'armature 301 d'un dixième de millimètres. Le miroir 303 est alors à sa position théorique. C'est-à-dire si la visière est parfaite il n'y a plus de réglage à faire pour que l'image perçue par le porteur du casque soit correcte.

C'est le joint 307 qui réalise la liaison élastique entre le support 304 et l'armature 301. Il est réalisé à l'aide d'une colle à faible retrait ayant des propriétés élastiques. Ainsi lorsque le support 304, et donc le miroir 303, est à sa position théorique, le joint 307 ramène le support 304, donc le miroir 303 vers les vis précédemment décrites. Le miroir 303 est donc maintenu en pression, via son support 304, sur les vis vissées dans les pas de vis 308 à 310. A partir de cette position théorique, on peut visser ou dévisser chacune des vis. On peut ainsi faire pivoter le miroir 303 autour de trois axes. Un axe matérialisé par la droite passant par l'extrémité de deux vis, celles correspondant aux pas de vis 308 et 309, un autre axe matérialisé par la droite passant par l'extrémité de deux vis, celles correspondant aux pas de vis 309 et 310, et un dernier axe matérialisé par la droite passant l'extrémité de deux vis, celles correspondant aux pas de vis 310 et 308. Ces trois degrés de liberté permettent de positionner le miroir 303 de telle sorte que le dispositif selon l'invention remplisse sa fonction.

Le miroir est donc fixé à l'armature 301 du dispositif par un joint 307 élastomère qui maintient le miroir en pression contre des vis vissées dans l'armature. Les extrémités de chaque couple de vis matérialisent des axes autour desquels il est possible de faire pivoter le miroir. Une action identique sur chacune des vis permet de déplacer le miroir en translation. Le fait d'ajuster ce miroir permet de modifier la position de la visière vue d'un module optique du dispositif optronique, et donc de focaliser l'image sur la visière pour qu'elle soit la plus nette possible. Cela corrige les erreurs de placement de la visière et ces défauts de courbure.

Dans une variante de l'invention, le fond du renflement 302 ne contient pas trois pas de vis mais quatre. Ces quatre pas de vis forment un carré inscrit dans le cercle décrit par le renflement 302. De la même manière que précédemment le support 304 est alors maintenu en pression sur l'extrémité des quatre vis correspondant à chacun des pas de vis. L'utilisation de quatre vis permet un réglage plus rapide car plus naturel. En effet avec quatre vis on obtient des axes orthogonaux. Si la manipulation des vis est alors plus délicate, la convergence vers la bonne position du miroir 303 est plus rapide car l'homme est habitué au repère orthonormé. La manipulation est plus délicate car il faut, pour que le réglage soit stable, que l'extrémité des quatre vis soit coplanaire. Une fois le miroir 303 correctement ajusté, le faisceau lumineux 305 issu d'un dispositif optique va se réfléchir sur le miroir 303 puis sur un miroir 311 avant d'être correctement projeté sur une visière non représentée.

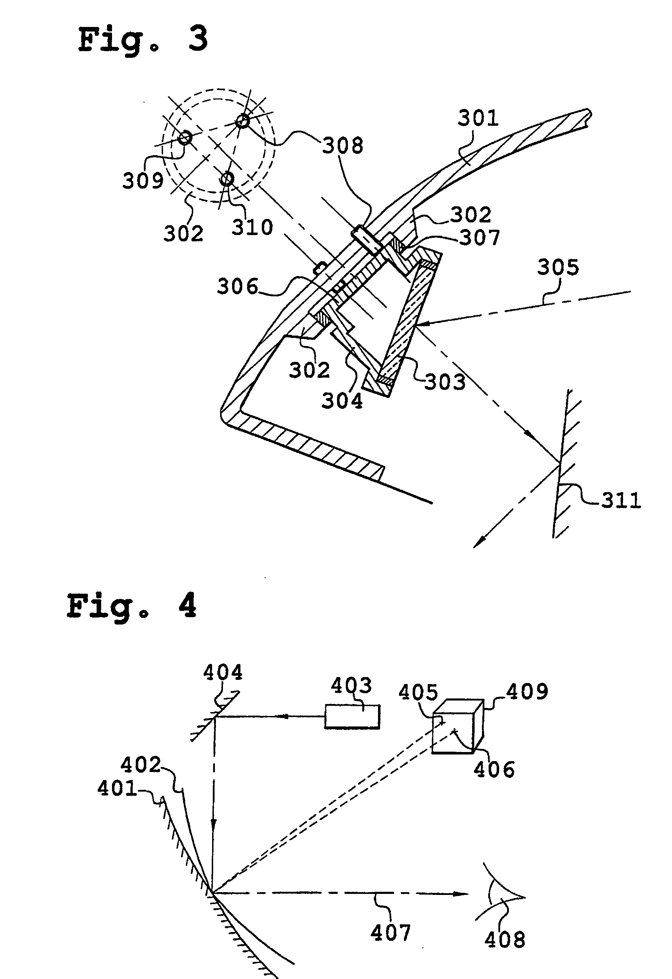

La figure 4 montre une visière 401 physique. La figure 4 montre aussi une visière 402 image de la visière 401 vue par un dispositif 403 optique de relais à travers un miroir 404 ajustable. La visière 401 a un centre de courbure 405. La visière 402 a un centre de courbure 406 théorique. Le centre 406 de courbure est tel que si la visière a son centre en ce point, une image 407 issue du dispositif 403 sera correctement perçue après réflexion sur le miroir 404 et la visière 402 par un oeil 408 d'un utilisateur du dispositif selon l'invention. Le centre 406 de courbure est le centre d'un cube 409 qui décrit toutes les positions possibles pour le centre de courbure de l'image de la visière 401 à travers le miroir 404 et vu par le dispositif 403 lorsqu'on ajuste le miroir 404. Le but de l'opération est donc que le dispositif 403 voit la visière 401 telle que celle-ci ait un centre de courbure au point 406.

## Revendications

1. Dispositif optronique, fixé sur un casque, comportant une source (104) d'images, un dispositif (105) optique de relais, une visière (108) de projection semi-réfléchissante, ces trois éléments étant maintenus ensemble par une armature (301) mécanique rigide et, entre l'optique de relais et la visière, sur le cheminement optique des rayons (109) issus de la source d'image, un miroir (106) plan de repliement dont la position est ajustable par rapport à l'armature (301), **caractérisé en ce que** le miroir (106) de repliement est fixé à un support rigide (304) lui-même relié à l'armature mécanique (301) par un joint élastique (307) et **en ce qu'**il est maintenu en pression via son support (304) sur des vis de butée vissées dans l'armature, ces vis permettant un pivotement du miroir autour d'axes passant par l'extrémité de deux vis.

2. Dispositif selon la revendication 1, **caractérisé en ce que** l'armature possède un renflement (302) et le support un fond (306) plat insérable dans le renflement (302), le joint (307) étant placé entre les parois du renflement (302) et les parois du fond (306).

3. Dispositif selon l'une des revendications 1 ou 2, **caractérisé en ce que** le joint (307) est un joint (307) élastomère.

4. Dispositif selon l'une des revendications 2 ou 3, **caractérisé en ce que** le renflement (302) possède un fond percé de pas de vis (308-310), le fond du support (306) venant en butée sur les vis.

5. Dispositif selon l'une des revendications 1 à 4, **caractérisé en ce que** le support du miroir de repliement est en buté sur trois vis de butée.

6. Dispositif selon l'une des revendications 1 à 4, **caractérisé en ce que** le support du miroir de repliement est en buté sur quatre vis de butée.

7. Dispositif selon l'une des revendications 5 ou 6, **caractérisé en ce que** les têtes des vis de butée sont accessibles de l'extérieur du dispositif.

## Patentansprüche

1. Optronische Vorrichtung, die auf einem Helm befestigt ist, mit einer Bildquelle (104), mit einer optischen Relaisvorrichtung (105), mit einer halbreflektierenden Projektions-Sichtscheibe (108), wobei diese drei Elemente von einem gemeinsamen starren Gestell (301) gehalten werden, und mit einem ebenen Umlenkspiegel (106) zwischen der Relaisoptik und der Sichtscheibe im optischen Verlauf der von der Bildquelle kommenden Strahlen (109), wobei die Lage des Spiegels (106) bezüglich des Gestells (301) justierbar ist, **dadurch gekennzeichnet, daß** der Umlenkspiegel (106) auf einem starren Träger (304) befestigt ist, der seinerseits am mechanischen Gestell (301) über eine elastische Dichtung (307) befestigt ist, und daß der Spiegel über seinen Träger (304) gegen Stellschrauben im Gestell gedrückt gehalten wird, wobei diese Schrauben ein Schwenken des Spiegels um durch die Enden jeweils zweier Schrauben verlaufende Achsen erlauben.

2. Vorrichtung nach Anspruch 1, **dadurch gekennzeichnet, daß** das Gestell einen Wulst (302) und der Träger (304) einen ebenen Grund (306) besitzt, der in den Wulst (302) einsetzbar ist, wobei die Dichtung zwischen den Wänden des Wulstes (302) und den Wänden des Grundes (306) liegt.

3. Vorrichtung nach einem der Ansprüche 1 und 2, **dadurch gekennzeichnet, daß** die Dichtung (307) eine Elastomerdichtung ist.

4. Vorrichtung nach einem der Ansprüche 2 und 3, **dadurch gekennzeichnet, daß** der Wulst (302) einen Grund hat, der von Gewindelöchern (308, 309, 310) durchdrungen ist, wobei der Grund des Trägers (306) an in diese Löcher eingesetzten Schrauben anliegt.

5. Vorrichtung nach einem der Ansprüche 1 bis 4, **dadurch gekennzeichnet, daß** der Träger für den Umlenkspiegel an drei Stellschrauben anliegt.

6. Vorrichtung nach einem der Ansprüche 1 bis 4, **dadurch gekennzeichnet, daß** der Träger für den Umlenkspiegel an vier Stellschrauben anliegt.

7. Vorrichtung nach einem der Ansprüche 5 und 6, **dadurch gekennzeichnet, daß** die Köpfe der Stellschrauben von außerhalb der Vorrichtung zugänglich sind.

## Claims

1. Optronic device, attached to a helmet, comprising an image source (104), a relay optic device (105), a semireflecting projection visor (108), these three components being held together by a rigid mechanical reinforcement (301) and, between the relay optic and the visor, on the optical path of rays (109) from the image source, a plane folding mirror (106), the position of which can be adjusted with respect to the reinforcement (301), **characterized in that** the folding mirror (106) is attached to a rigid support (304), itself connected to the mechanical reinforcement (301) by an elastic seal (307) and **in that** it is held under pressure via its support (304) on adjustment screws screwed into the reinforcement, these screws enabling the mirror to pivot about the axes passing through the end of two screws.

2. Device according to Claim 1, **characterized in that** the reinforcement has a bulge (302) and the support has a flat bottom (306) which can be inserted in the bulge (302), the seal (307) being placed between the walls of the bulge (302) and the walls of the bottom (306).

3. Device according to either of Claims 1 or 2, **characterized in that** the seal (307) is an elastomeric seal (307).

4. Device according to either of Claims 2 or 3, **characterized in that** the bulge (302) has a bottom drilled with screw threads (308-310), the bottom of the support (306) abutting against the screws.

5. Device according to one of Claims 1 to 4, **characterized in that** the support for the folding mirror abuts against three adjustment screws.

6. Device according to one of Claims 1 to 4, **characterized in that** the support for the folding mirror abuts against four adjustment screws.

7. Device according to one of Claims 5 or 6, **characterized in that** the heads of the adjustment screws are accessible from the outside of the device.
